# FASCICULE DE BREVET EUROPEEN

(11) **EP 1 224 823 B1**
(45) Date de publication et mention de la délivrance du brevet: **02.03.2005**
(21) Numéro de dépôt: 00968049.7
(22) Date de dépôt: 13.10.2000
(51) Int. Cl.: H04Q 7/32

(54) **Procédé et système de commande d'un équipement tiers par une carte SIM, et dispositifs correspondants**
Verfahren und System zur Steuerung eines Zusatzgerätes durch eine SIM-Karte, und entsprechende Einrichtungen
Method and system for controlling a peripheral device through a SIM card, and corresponding devices

(30) Priorité: 26.10.1999 FR 9913645
(43) Date de publication de la demande: 24.07.2002
(73) Titulaire: Wavecom, 93130 Issy les Moulineaux (FR)
(72) Inventeur: AMIENS, Christian, F-92270 Bois-Colombes (FR)
(74) Mandataire: Vidon, Patrice
(86) Numéro de dépôt international: PCT/FR2000/002878
(87) Numéro de publication internationale: WO 2001/031953

(56) Documents cités:
- EP-A- 0 869 691
- DE-A- 19 816 575
- US-A- 5 887 266
- "DIGITAL CELLULAR TELECOMMUNICATIONS SYSTEM (PHASE 2+), AT COMMAND SET FOR GSM MOBILE EQUIPMENT (GSM 07.07 VERSION 5.1.0)" , EUROPEAN TELECOMMUNICATION STANDARD,XX,XX, PAGE(S) 1-79 XP002083871 section 8.10 (page 52 - page 53) section 8.17 (page 58) section 8.18 (page 58 - page 59)

## Description

Le domaine de l'invention est celui des systèmes de radiocommunication selon la norme GSM 900 (pour "Global System for Mobile communications 900 MHz" en anglais), ou une norme équivalente, telle que notamment la norme DCS 1800 (pour "Digital Cellular System 1800 MHz" en anglais).

Plus précisément, l'invention concerne un système et un procédé de commande d'un équipement tiers par une carte SIM, via un module de radiocommunication. L'invention concerne également le module de radiocommunication et l'équipement tiers correspondants.

De façon classique, un abonné d'un système de radiocommunication dispose d'une station mobile (parfois aussi appelée radiotéléphone mobile ou téléphone portable) comprenant :
- un terminal (ou ME, pour "Mobile Equipment" en anglais), comprenant lui-même un module de radiocommunication (ou "module GSM") assurant la fonction de communication sans fil et pilotant divers éléments matériels (écran, clavier, haut-parleur, ...) ;
- coopérant avec une carte SIM (pour "Subscriber Identity Module" en anglais, ou module d'identification d'abonné).

Optionnellement, il est prévu un jeu de commandes et de procédures appelé "SIM Application Toolkit". Le fonctionnement en est le suivant : la carte SIM envoie une commande SAT (pour "commande SIM Application Toolkit") au terminal, qui l'exécute puis rend compte à la carte SIM de la bonne ou mauvaise exécution de la commande SAT. Pour plus d'informations, on pourra se reporter à la norme "GSM 11.14 (Phase 2+)" de l'ETSI, qui est insérée ici par référence.

En résumé, le "SIM Application Toolkit" permet à la carte SIM de "prendre la main" et d'envoyer des commandes au terminal, de façon à piloter certains éléments matériels (écran, clavier, haut-parleur, ...) de l'interface homme/machine du terminal. Ainsi, la carte SIM peut notamment piloter l'affichage à l'écran d'un menu ou d'un texte donné, la saisie de données au clavier par l'utilisateur, l'envoi d'un message court, le jeu par le haut-parleur d'une tonalité, l'établissement d'un appel, la fourniture d'une information de localisation, etc. Le "SIM Application Toolkit" permet donc l'introduction de nouvelles fonctionnalités, qui ouvre la voie à une large palette de services à valeur ajoutée. En effet, les fournisseurs de services peuvent développer de nouvelles applications pour les abonnés et les charger dans les cartes SIM, sans modification des terminaux de radiocommunication.

Il est important de noter que les fonctionnalités du "SIM Application Toolkit" n'ont été conçues à l'origine, et ne sont offertes aujourd'hui, que pour une carte SIM coopérant avec un terminal de radiocommunication. Il n'est rien prévu dans le cas où le terminal coopère en outre avec un équipement tiers et joue uniquement un rôle de modem.

Par ailleurs, d'autres applications ont d'ores et déjà été envisagées pour le module de radiocommunication précité.

Il a notamment été proposé d'intégrer le module de radiocommunication dans des dispositifs autres que des terminaux de radiocommunication, mais nécessitant néanmoins une fonctionnalité de communication sans fil. A titre d'exemple, on peut citer des dispositifs de télémétrie (relevés de compteur) ou encore des dispositifs lecteur de cartes bancaires.

Il a également été proposé de fournir le module de radiocommunication sous forme indépendante : il est alors qualifié de modem. Un tel modem ne comprend aucun élément matériel (écran, clavier, haut-parleur, ...) d'interface homme/machine. Il est destiné à coopérer avec un équipement tiers (supportant une application cliente), qui lui possède des éléments matériels d'interface homme/machine. L'équipement tiers peut notamment, mais non exclusivement, être un micro-ordinateur. D'une façon générale, il commande le module, généralement grâce à un jeu de commandes AT (pour "ATtention command" en anglais). Ces dernières sont prévues à l'origine pour permettre à un équipement tiers (ou TE pour "Terminal Equipment") d'exiger d'un terminal de radiocommunication auquel il est relié d'exécuter certaines actions prédéterminées. Pour plus de précisions concernant ces commandes AT, on pourra se reporter d'une part à la norme "GSM 07.07" de l'ETSI et d'autre part à la recommandation V25ter de l'ITU-T, qui sont insérées ici par référence.

Un terminal de radiocommunication, ou un autre dispositif tel que précité, peut également être utilisé, de façon exceptionnelle, comme modem pour un équipement tiers avec lequel il coopère. On se retrouve alors, d'un point de vue fonctionnement, dans une situation identique à celle discutée ci-dessus pour un modem proprement dit (c'est-à-dire lorsque le module de radiocommumcation est fourni sous forme indépendante).

Malheureusement, il apparaît que le module de radiocommunication, quelle que soit l'application envisagée (terminal, autre dispositif, ou modem), ne permet pas la mise en oeuvre du "SIM Application Toolkit" dès lors que ce module coopère avec un équipement tiers et se comporte uniquement comme un modem. En effet, dans ce cas, ce sont les éléments matériels de l'interface homme/machine, de l'équipement tiers qui sont utilisés. Le module ne pilote pas directement ces éléments matériels d'interface homme/machine, et ne peut donc pas exécuter les commandes SAT que lui envoie la carte SIM.

En d'autres termes, la technique actuelle présente l'inconvénient majeur de ne pas permettre à une carte SIM d'utiliser le "SIM Application Toolkit" pour commander un équipement tiers, via un module de radiocommunication.

On connaît cependant dans l'état de la technique les trois documents suivants (appelés ci-après D1, D2 et D3 respectivement) :
- document EP 0 869 691 (DEUTSCHE TELEKOM) ;
- document DIGITAL CELLULAR TELECOMMUNICATIONS SYSTEM (PHASE 2+), AT COMMAND SET FOR GSM MOBILE EQUIPMENT (GSM 07.07 Version 5.1.0), European Telecommunication Std, pages 1-79 ;
- DE 19816575 (MANNESMANNAG).

Le document D1 décrit un radiotéléphone GSM (aussi appelé station mobile) 1 coopérant avec une carte SIM 6 et un composant externe 9 (par exemple via une interface série 8). La carte SIM est une proactive SIM, mettant en oeuvre le SIM Application Toolkit pour interagir avec le réseau GSM et le radiotéléphone. Elle joue le rôle de passerelle entre le composant externe et le réseau GSM ou le radiotéléphone. Le composant externe est par exemple un processeur universel ou à usage général. Il permet d'offrir au moins une fonctionnalité supplémentaire, déclenchée et contrôlée par le biais de la carte SIM. Il exécute donc un programme permettant, via la carte SIM, de transmettre des ordres au radiotéléphone (voire même d'en contrôler le fonctionnement complet) et communiquer à volonté dans le réseau GSM. En d'autres termes, le composant externe étend les fonctionnalités du radiotéléphone en offrant des fonctionnalités supplémentaires que n'offre pas la carte SIM.

Dans le document D1, la carte SIM joue le rôle de passerelle notamment entre le composant externe (ou équipement tiers) et le radiotéléphone (qui comprend un module de radiocommunication). Dans l'invention, les rôles des différents éléments ne sont pas du tout les mêmes puisque le module de radiocommunication joue le rôle de passerelle entre la carte SIM et l'équipement tiers. Par ailleurs, dans le document D1, le composant externe exécute un programme permettant, via la carte SIM, de transmettre des ordres au radiotéléphone (voire même d'en contrôler le fonctionnement complet) et communiquer à volonté dans le réseau GSM. La carte SIM permet au départ de déclencher l'exécution de ce programme par le composant externe, ensuite c'est donc le composant externe qui prend la main (c'est au sens où la carte SIM joue le rôle d'une passerelle qu'il faut donc comprendre le fait que la fonctionnalité supplémentaire est contrôlée par le biais de la carte SIM). Dans le cadre de la présente invention, l'équipement tiers ne fait qu'exécuter une tâche à la place du module. Il ne prend donc jamais la main et ne transmet donc pas d'ordres au module (et a fortiori n'en contrôle pas le fonctionnement complet). En d'autres termes, l'équipement tiers n'étend pas les fonctionnalités du radiotéléphone en offrant des fonctionnalités supplémentaires que n'offre pas la carte SIM.

Le paragraphe 8.17 du document D2, intitulé "Generic SIM access +CSIM", décrit une commande AT particulière ("+CSIM") permettant à une application distante sur un équipement tiers (TE) de contrôler directement la SIM et d'accéder à la base de données de la SIM. Plus précisément, l'équipement tiers envoie à la SIM la commande AT "+CSIM", dont un paramètre est une commande au format GSM 11.11. Inversement, la SIM envoie à l'équipement tiers une réponse AT "+CSIM", dont un paramètre est une réponse à la commande au format GSM 11.11 préalablement reçue. Il est clairement indiqué que l'équipement tiers commande la carte SIM. Or, dans le cadre de l'invention c'est l'inverse : la carte SIM commande l'équipement tiers, via le module. A fortiori, D2 ne suggère en aucune façon la caractéristique de l'invention selon laquelle l'équipement tiers exécute à la place du module au moins une tâche dont l'exécution est demandée par la carte SIM dans au moins un premier dialogue entre la carte SIM et le module.

Le document D3 décrit un téléphone mobile 33 coopérant avec une carte SIM 38 et un équipement tiers 39, via une interface 32. Le téléphone mobile et la carte SIM mettent en oeuvre le SIM Application Toolkit. Deux cas sont décrits. Dans le premier cas, l'équipement tiers est actif et il héberge des applications de service similaires ou identiques à celles présentes sur la carte SIM. L'équipement tiers n'a pas besoin des fonctionnalités MMI du téléphone mobile et il utilise la carte SIM pour envoyer vers ou recevoir depuis le réseau des flux de données. Dans le second cas, l'équipement tiers est passif et les applications de services fonctionnent sur la carte SIM. L'échange des messages MMI, entre la carte SIM et l'équipement tiers a lieu suivant un protocole défini. L'équipement tiers est par exemple un appareil d'affichage passif ou un appareil qui prend en charge la partie esclave dans une relation maître/esclave avec la carte SIM. Le second cas discuté dans D3 prévoit que la carte SIM 38 commande l'équipement tiers, via le téléphone mobile. Il semble donc que, dans ce cas, le téléphone mobile effectue une conversion de dialogues. Toutefois, le document D3 ne divulgue ni ne suggère en aucune façon les commandes et/ou indications avec lesquelles sont construits les dialogues entre le téléphone mobile et l'équipement tiers.

L'invention a notamment pour objectif de pallier cet inconvénient majeur de l'état de la technique.

Plus précisément, l'un des objectifs de la présente invention est de fournir un système et un procédé de commande d'un équipement tiers par une carte SIM mettant en oeuvre le "SIM Application Toolkit", via un module de radiocommunication. En d'autres termes, l'objectif est d'ouvrir les fonctionnalités du "SIM Application Toolkit" - conçues à l'origine pour les terminaux de radiocommunication - à des équipements tiers.

L'invention a également pour objectif de fournir de tels système et procédé, qui ne nécessitent aucune modification au sein de la carte SIM.

Un autre objectif de l'invention est de fournir de tels système et procédé, qui soient adaptés aux différents types de dialogues (ou primitives de dialogues), de type "SIM Application Toolkit", déjà existants, voire même à venir (si de nouvelles commandes SAT sont ajoutées au jeu de commandes SAT actuel).

Ces différents objectifs, ainsi que d'autres qui apparaîtront par la suite, sont atteints selon l'invention à l'aide d'un module de radiocommunication, selon la revendication 1.

Le principe général de l'invention consiste donc à effectuer une conversion de dialogue dans le module de radiocommunication. De cette façon, on reporte un premier dialogue, sur une première interface entre la carte SIM et le module, en un second dialogue, sur une seconde interface entre le module et l'équipement tiers. Ainsi, c'est l'équipement tiers, grâce aux éléments matériels de son interface homme/machine, qui au final exécute les commandes SAT que la carte SIM envoie au module. La présente invention permet donc aux équipementiers tiers d'avoir accès aux applications "SIM Application Toolkit" embarquées dans la carte SIM.

Ainsi, la conversion de dialogue est mise en oeuvre avec uniquement un jeu restreint de trois commandes, envoyées par l'équipement tiers, et deux indications, envoyées par le module. Le caractère générique de ces commandes et indications permet d'assurer une conversion quel que soit le premier dialogue (entre la carte SIM et le module). Ceci est également vrai pour de futures primitives de dialogue, utilisant de nouvelles commandes SAT (non connues à ce jour). En d'autres termes, ce jeu restreint de commandes et d'indications génériques permet de décrire tous types de second dialogue.

De façon avantageuse, ledit module de radiocommunication est compris dans un dispositif appartenant au groupe comprenant :
- les terminaux de radiocommunication ;
- les dispositifs, autres que les terminaux de radiocommunication, nécessitant une fonctionnalité de communication sans fil ;
- les modems.

Dans les deux premiers cas (terminal ou autre dispositif), la présente invention trouve un intérêt uniquement lorsque le module de radiocommunication joue le rôle de modem pour l'équipement tiers et ne commande donc pas directement les éléments matériels de l'interface homme/machine.

Avantageusement, ledit module coopère avec ledit équipement tiers sur un support physique appartenant au groupe comprenant : les liens série, les liens infrarouges, les liens radio, ... Il est clair que cette liste n'est pas exhaustive. Un exemple de lien radio est un lien HF selon la norme "Bluetooth".

On rappelle qu'une indication (ou "Unsolicited Result" en anglais) est un message spontané, qui n'est pas une réponse à une commande précédente et qui n'implique pas de réponse.

De façon préférentielle, ledit second codage appartient au groupe comprenant : les codages de type AT et les codages de type encapsulation de niveau 2. Il est clair que d'autres types de codage peuvent être envisagés, tout en restant dans le cadre de la présente invention.

L'invention concerne également un équipement tiers, selon la revendication 5.

L'invention concerne aussi un système de commande selon la revendication 6.

Enfin, l'invention concerne également un procédé de commande d'un équipement tiers par une carte SIM, via un module de radiocommunication selon la revendication 7.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :

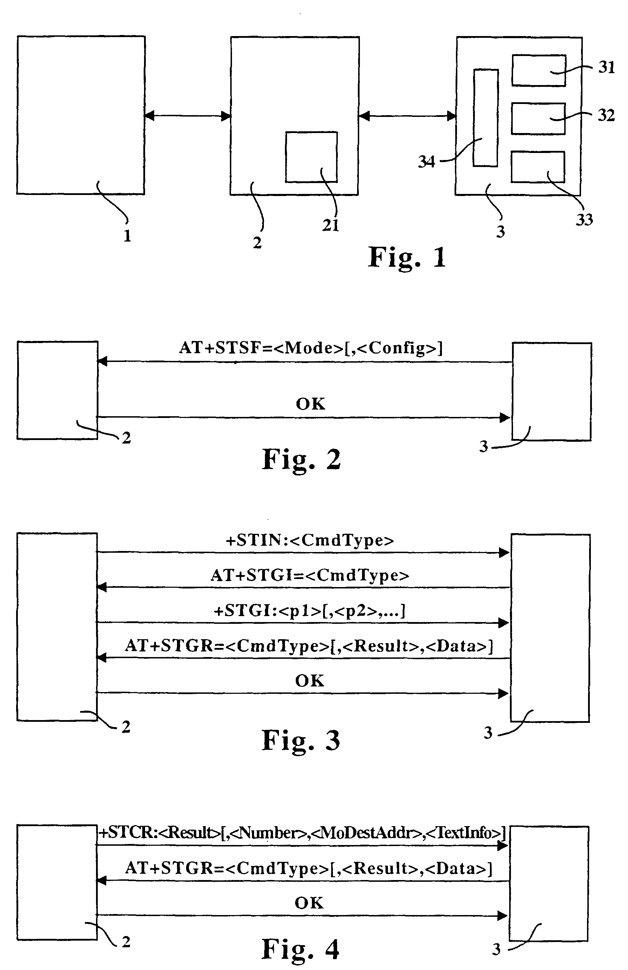

- la figure 1 présente un schéma simplifié d'un système selon la présente invention de commande d'un équipement tiers par une carte SIM, via un module de radiocommunication ; et
- chacune des figures 2 à 4 présente un exemple de primitive de dialogue entre le module de radiocommunication et l'équipement tiers.

Comme illustré sur le schéma de la figure 1, la présente invention concerne donc un système de commande d'un équipement tiers 3 par une carte SIM 1, via un module de radiocommunication 2.

On suppose que la carte SIM 1 est du type pouvant mettre en oeuvre le "SIM Application Toolkit". Ceci signifie que la carte SIM 1 coopère avec le module de radiocommunication 2 sous la forme de premiers dialogues, en lui envoyant des commandes SAT. On rappelle que le "SIM Application Toolkit", qui est basé sur un jeu d'environ 25 commandes SAT réparties en trois classes, comprend cinq types de premiers dialogues, à l'origine entre une carte SIM et un terminal de radiocommunication :
- le chargement de profil (ou "Profile Download"), permettant au terminal d'indiquer à la carte SIM quelles fonctionnalités du "SIM Application Toolkit" il peut mettre en oeuvre (c'est-à-dire quelles commandes SAT il peut exécuter) ;
- le mécanisme de "Proactive SIM", permettant à la carte SIM de demander au terminal d'exécuter certaines actions, telles que notamment : l'affichage d'un menu, l'affichage d'un texte donné, la récupération d'une entrée (saisie) par l'usager, l'envoi d'un message court, le jeu d'une tonalité demandée, l'établissement d'un appel, la fourniture d'une information de localisation, etc ;
- le chargement de données dans la carte SIM, permettant de transférer directement à la carte SIM des données (SMS, répertoire, ...) ou des programmes (applets Java) reçus par le terminal grâce à des messages courts (SMS) ou une radiocommunication cellulaire ;
- la sélection de menu, permettant d'informer la carte SIM d'une sélection effectuée, par l'utilisateur du terminal, au sein d'un jeu d'items d'un menu préalablement fournis au terminal ;
- le contrôle d'appel par la carte SIM, permettant à la carte SIM de vérifier tous les numéros composés, toutes les chaînes de contrôle de service supplémentaire et toutes les chaînes USSD ("Unstructured Supplementary Service Data"), avant la connexion au réseau.

D'ores et déjà, il convient de noter que l'un de ces types de premier dialogue, à savoir le chargement de données dans la carte SIM, ne nécessite aucune conversion de dialogue. En effet, il est transparent pour le terminal.

On suppose également que le module radiocommunication 2 n'est pas capable d'exécuter seul ces commandes SAT, du fait qu'il ne pilote directement aucun moyen d'interface homme/machine avec un utilisateur. On rappelle que :
- dans le cas où le module est compris dans un modem, cette hypothèse est toujours vérifiée ;
- dans le cas où le module est compris dans un terminal de radiocommunication (ou un dispositif autre, tel que décrit plus haut), cette hypothèse n'est vérifiée que lorsque le terminal (ou le dispositif autre) se comporte comme un modem.

On suppose enfin que l'équipement tiers 3 exécute une application cliente et comprend des moyens d'interface homme/machine avec un utilisateur, tels que notamment un écran 31, un clavier 32 et un haut-parleur 33. Il s'agit par exemple d'un micro-ordinateur.

Selon l'invention, et de façon transparente pour la carte SIM qui ne "voit" que le module de radiocommunication, le module radiocommunication 2 comprend des moyens 21 de conversion de chaque premier dialogue, entre la carte SIM 1 et le module 2, en un second dialogue, entre le module 2 et l'équipement tiers 3. L'équipement tiers 3 comprend de son côté des moyens 34 (par exemple un processeur) de mise en oeuvre de chaque second dialogue, entre le module 2 et l'équipement tiers 3.

Chaque second dialogue, entre le module 2 et l'équipement tiers 3, consiste par exemple en un échange de commandes et d'indications au format AT sur un lien série.

On présente maintenant, en relation avec les figures 2 à 4, un mode de réalisation particulier d'un jeu restreint de commandes (envoyées par l'équipement tiers 3 au module 2) et d'indications génériques (envoyées par le module 2 à l'équipement tiers 3), comprenant :
- une commande de configuration, "AT+STSF" (pour "SIM Toolkit Set Facilities" en anglais) ;
- une indication de commande SAT, "+STIN" (pour "SIM Toolkit INdication" en anglais) ;
- une commande de récupération d'informations, "AT+STGI" (pour "SIM Toolkit Get Information" en anglais) ;
- une indication de contrôle de réponse, "+STCR" (pour "SIM Toolkit Control Response" en anglais) ;
- une commande de fourniture de réponse-utilisateur, "AT+STGR" (pour "SIM Toolkit Give Response" en anglais).

Comme cela va être expliqué par la suite, ce jeu restreint de commandes et d'indications génériques, au format AT, permet de décrire tous types de second dialogue. Il vient compléter le jeu de commandes et d'indications AT existant.

### A) La commande de configuration, "AT+STSF"

Elle précente les trois syntaxes suivantes:

| Syntaxes de la commande "AT+STSF" | Réponses possibles |
|---|---|
| AT+STSF=<Mode>[, <Config>] | * OK * +CME ERROR: <err> |
| AT+STSF? | * +STSF: <Mode>, <Config> |
| AT+STSF=? | * +STSF: (0-2), (160060C0-5F9FFF7) * OK |

Le paramètre <Mode> peut par exemple prendre les valeurs 0, 1 et 2, pour respectivement désactiver, activer ou configurer les fonctionnalités du "SIM Application Toolkit. L'activation ou désactivation des fonctionnalités du "SIM Application Toolkit" requiert l'utilisation d'une commande +CFUN ("Set phone functionality" en anglais) pour relancer le module. Le paramètre <Config> contient la liste des fonctionnalités du "SIM Application Toolkit" qui sont supportées par l'équipement tiers.

La première syntaxe (AT+STSF=<Mode>[, <Config>]) permet à l'équipement tiers d'informer le module des fonctionnalités du "SIM Application Toolkit" que l'équipement tiers supporte. Ceci est réalisé par l'activation, la désactivation ou la configuration des fonctionnalités du "SIM Application Toolkit". En réponse, le module envoie OK si tout s'est bien passé, ou un message d'erreur paramétré en fonction du type d'erreur (+CME ERROR: <err>) dans le cas contraire.

Les seconde et troisième syntaxes sont plutôt destinées à la personne chargée du développement et/ou la maintenance de l'application cliente supportée par l'équipement tiers. La seconde syntaxe (AT+STSF?) permet à l'équipement tiers de récupérer la configuration courante du module. La troisième syntaxe (AT+STSF=?) permet à l'équipement tiers de récupérer soit les plages des valeurs possibles des différents paramètres (+STSF: (0-2), (160060C0-5F9FFF7)), soit tout simplement "OK".

### B) L'indication de commande SAT. "+STIN"

Elle présente la syntaxe suivante : +STIN:<CmdType>

Elle permet au module d'indiquer à l'équipement tiers qu'il a reçu de la carte SIM l'une des commandes SAT, précisée par le paramètre <CmdType>. Par exemple, le paramètre <CmdType> prend la valeur 1 pour indiquer que la carte SIM a envoyée la commande "Display text" au module, 2 pour la commande "Get Inkey", 3 pour la commande "Get Input", 4 pour la commande "Setup Call", 5 pour la commande "Play Tone", 6 pour la commande "Sel Item", 7 pour la commande "Refresh", 8 pour la commande "Send SS", 9 pour la commande "Send SMS", 98 pour indiquer le temps de repos quand il n'y a pas de réponse de l'utilisateur, et 99 pour la commande "End Session".

### C) La commande de récupération d'informations. "AT+STGI"

Elle présente les deux syntaxes suivantes :

| Syntaxes de la commande "AT+STGI" | Réponses possibles |
|---|---|
| AT+STGI=<CmdType> | * +STGI: <p1>, <p2>, ... * +CME ERROR: <err> |
| AT+STGI=? | * +STGI: (0-9) * OK |

Le paramètre <CmdType> peut par exemple prendre les valeurs 0 à 9, comme expliqué ci-dessus pour l'indication de commande SAT ("+STIN"). Dans les différentes réponses possibles, les paramètres <p1>, <p2>, ... sont fonction de la valeur du paramètre <CmdType>. Par exemple, si <CmdType> = 4 (la carte SIM a envoyée la commande "Setup Call" au module), alors la réponse comporte les paramètres suivants : <Type>, <CalledNb>, <SubAddress>, <Class>, définissant respectivement le type, le numéro appelé, la sous-adresse et la classe pour l'appel à établir.

La première syntaxe (AT+STGI=<CmdType>) permet à l'équipement tiers de demander au module de lui fournir une réponse-module contenant des informations concernant la commande SAT visée dans une indication de commande SAT ("+STIN") préalablement reçue par l'équipement tiers. Le module envoie soit la réponse-module attendue (+STGI: <p1>, <p2>, ...), soit un message d'erreur paramétré en fonction du type d'erreur (+CME ERROR: <err>).

La seconde syntaxe (AT+STGI=?) est plutôt destinée à la personne chargée du développement et/ou la maintenance de l'application cliente supportée par l'équipement tiers. Elle permet à l'équipement tiers de récupérer soit les plages des valeurs possibles des différents paramètres (+STGI: (0-9)), soit tout simplement "OK".

### D) L'indication de contrôle de réponse, "+STCR"

Elle présente la syntaxe suivante :
+STCR:<Result>[, <Number>, <MODestAddr>, <TextInfo>]

Elle permet au module de demander à l'équipement tiers de lui fournir une réponse-utilisateur (+STGR, cf. ci-dessous) concernant une connexion que le module souhaite établir, cette réponse-utilisateur étant destinée à être fournie à la carte SIM par le module, de façon que la carte SIM effectue un contrôle préalable de la connexion.

Par exemple, le paramètre <Result> prend la valeur 0 pour indiquer que le contrôle de réponse n'est pas autorisé, et 1 pour un contrôle de réponse avec modifications. Le paramètre <Number> peut être un numéro appelé, une adresse d'un centre de services ou une chaîne "SS" au format ASCII. Le paramètre <MODestAddr> est une adresse de destination "MO" au format ASCII. Le paramètre <TextInfo> est un texte d'information au format ASCII.

### E) La commande de fourniture de réponse-utilisateur. "AT+STGR"

Elle présente les deux syntaxes suivantes :

| Syntaxes de la commande "AT+STGR" | Réponses possibles |
|---|---|
| AT+STGR=<CmdType>[,<Result>, <Data>] | * OK * +CME ERROR: <err> |
| AT+STGR=? | * OK |

Les valeurs possibles et la signification des paramètres <Result> et <Data>, lorsqu'ils existent, sont fonction de la valeur et de la signification du paramètre <CmdType>. Par exempte, le paramètre <CmdType> prend la valeur 4 pour indiquer qu'il s'agit d'une réponse-utilisateur à la commande "Setup Call". Dans ce cas, seul le paramètre <Result> est défini, et prend la valeur 0 ou 1 selon que l'utilisateur refuse ou accepte l'appel.

La première syntaxe (AT+STGR=<CmdType>[,<Result>, <Data>]) permet à l'équipement tiers de fournir, sous forme de commande, une réponse-utilisateur ("AT+STGR") au module, après que l'équipement tiers a reçu successivement une indication de commande SAT ("+STIN") puis une réponse-module ("+STGI") à une commande de récupération d'informations correspondante ("AT+STGI"). En réponse, le module envoie OK si tout s'est bien passé, ou un message d'erreur paramétré en fonction du type d'erreur (+CME ERROR: <err>) dans le cas contraire.

Les différentes réponses-utilisateur possibles permettent à l'équipement tiers de répondre aux commandes proactive suivantes : "GET_INKEY" (touche appuyée par l'utilisateur), "GET_INPUT" (message saisi par l'utilisateur), "SELECT_ITEM" (item sélectionné), "SETUP_CALL" (confirmation de l'utilisateur), "DISP_TEXT" (confirmation de l'utilisateur pour effacer le message) ET "END_SESSION" (abandon de l'utilisateur).

La seconde syntaxe (AT+STGR=?) est plutôt destinée à la personne chargée du développement et/ou la maintenance de l'application cliente supportée par l'équipement tiers. Elle permet à l'équipement tiers de récupérer tout simplement "OK".

Comme illustré sur la figure 2, à un premier dialogue du type "chargement de profil" (aussi appelé "Profile Download"), correspond un second dialogue utilisant la commande de configuration ("AT+STSF").

Comme illustré sur la figure 3, à un premier dialogue du type "Proactive SIM" ou "Profile Download" ou "sélection de menu", correspond un second dialogue utilisant l'indication de commande SAT ("+STIN"), la commande de récupération d'informations, ("AT+STGI"), et la commande de fourniture de réponse-utilisateur ("AT+STGR").

Comme illustré sur la figure 4, à un premier dialogue du type "contrôle d'appel par la carte SIM", correspond un second dialogue utilisant l'indication de contrôle de réponse ("+STCR") et la commande de fourniture de réponse-utilisateur ("AT+STGR").

Il est clair que de nombreux autres modes de réalisation de l'invention peuvent être envisagés. On peut notamment prévoir d'autres types de support physique, entre le module 2 et l'équipement tiers 3, tels que notamment un lien infrarouge ou un lien radio.

De même, d'autres types de codage des commandes et/ou indications formant les seconds dialogues (entre le module et l'équipement tiers) peuvent être envisagés, tels que notamment des codages selon des protocoles d'encapsulation de niveau 2.

## Revendications

1. Module de radiocommunication (2), du type coopérant avec une carte SIM (1) sous la forme d'au moins un premier dialogue de type "SIM Application Toolkit", ledit au moins un premier dialogue étant construit avec au moins une partie d'un jeu de commandes "SIM Application Toolkit", dites commandes SAT, écrites selon un premier codage, le module coopérant en outre avec un équipement tiers (3) et comprenant des moyens (21) de conversion dudit au moins un premier dialogue, entre la carte SIM et le module, en au moins un second dialogue, entre le module et l'équipement tiers, ledit au moins un second dialogue étant construit avec au moins une partie d'un jeu de commandes et/ou d'indications de substitution écrites selon un second codage distinct du premier codage, de façon que la carte SIM commande l'équipement tiers via le module,
**caractérisé en ce que** ledit jeu de commandes et/ou d'indications de substitution comprend :
- une commande de configuration (STSF), par laquelle l'équipement tiers informe le module des fonctionnalités de type "SIM Application Toolkit" que ledit équipement tiers supporte ;
- une indication de commande SAT (STIN), par laquelle le module indique à l'équipement tiers laquelle desdites commandes SAT il a reçue de la carte SIM ;
- une commande de récupération d'informations (STGI), par laquelle l'équipement tiers demande au module de lui fournir une réponse, dite réponse du module, contenant des informations concernant l'une desdites commandes SAT visée dans une indication de commande SAT préalablement reçue par l'équipement tiers ;
- une indication de contrôle de réponse (STCR), par laquelle le module demande à l'équipement tiers de lui fournir une réponse, dite réponse de l'utilisateur, concernant une connexion que le module souhaite établir, ladite réponse de l'utilisateur étant destinée à être fournie à la carte SIM par le module, de façon que la carte SIM effectue un contrôle préalable de ladite connexion ;
- une commande de fourniture d'une réponse, dite réponse de l'utilisateur (STGR), par laquelle l'équipement tiers fournit une réponse de l'utilisateur au module, après que ledit équipement tiers a reçu successivement une indication de commande SAT puis une réponse du module à une commande de récupération d'informations correspondante.

2. Module selon la revendication 1, **caractérisé en ce que** ledit module de radiocommunication (1) est compris dans un dispositif appartenant au groupe comprenant:
- les terminaux de radiocommunication ;
- les dispositifs, autres que les terminaux de radiocommunication, nécessitant une fonctionnalité de communication sans fil ;
- les modems.

3. Module selon l'une quelconque des revendications 1 et 2, **caractérisé en ce que** ledit module (1) coopère avec ledit équipement tiers (3) sur un support physique appartenant au groupe comprenant :
- les liens série ;
- les liens infrarouges ;
- les liens radio.

4. Module selon l'une quelconque des revendications 1 à 3, **caractérisé en ce que** ledit second codage appartient au groupe comprenant :
- les codages de type AT ;
- les codages de type encapsulation de niveau 2.

5. Equipement tiers, du type coopérant avec un module de radiocommunication selon l'une quelconque des revendications 1 à 4, **caractérisé en ce qu'**il comprend des moyens (31 à 34) d'utilisation dudit jeu de commandes et/ou d'indications de substitution comprenant ladite commande de configuration (STSF), ladite indication de commande SAT (STIN), ladite commande de récupération d'informations (STGI), ladite indication de contrôle de réponse (STCR) et ladite commande de fourniture d'une réponse, dite réponse de l'utilisateur (STGR), lesdits moyens (31 à 34) d'utilisation permettant la mise en oeuvre dudit au moins un second dialogue, entre ledit module et ledit équipement tiers, de façon que ladite carte SIM commande ledit équipement tiers via ledit module.

6. Système de commande d'un équipement tiers (3) par une carte SIM (1), via un module de radiocommunication (2), **caractérisé en ce que** ledit module de radiocommunication (2) est conforme à l'une quelconque des revendications 1 à 4.

7. Procédé de commande d'un équipement tiers (3) par une carte SIM (1), via un module de radiocommunication (2), ledit module de radiocommunication étant du type coopérant avec ladite carte SIM sous la forme d'au moins un premier dialogue de type "SIM Application Toolkit", ledit au moins un premier dialogue étant construit avec au moins une partie d'un jeu de commandes "SIM Application Toolkit", dites commandes SAT, écrites selon un premier codage,
ledit procédé comprenant une étape de conversion, par ledit module, dudit au moins un premier dialogue, entre ladite carte SIM et ledit module, en au moins un second dialogue, entre ledit module et ledit équipement tiers, ledit au moins un second dialogue étant construit avec au moins une partie d'un jeu de commandes et/ou d'indications de substitution écrites selon un second codage distinct du premier codage, de façon que ladite carte SIM commande ledit équipement tiers via ledit module.
**caractérisé en ce que** ledit jeu de commandes et/ou d'indications de substitution comprend :
- une commande de configuration (STSF), par laquelle l'équipement tiers informe le module des fonctionnalités de type "SIM Application Toolkit" que ledit équipement tiers supporte ;
- une indication de commande SAT (STIN), par laquelle le module indique à l'équipement tiers laquelle desdites commandes SAT il a reçue de la carte SIM ;
- une commande de récupération d'informations (STGI), par laquelle l'équipement tiers demande au module de lui fournir une réponse, dite réponse du module, contenant des informations concernant l'une desdites commandes SAT visée dans une indication de commande SAT préalablement reçue par l'équipement tiers ;
- une indication de contrôle de réponse (STCR), par laquelle le module demande à l'équipement tiers de lui fournir une réponse, dite réponse de l'utilisateur, concernant une connexion que le module souhaite établir, ladite réponse de l'utilisateur étant destinée à être fournie à la carte SIM par le module, de façon que la carte SIM effectue un contrôle préalable de ladite connexion ;
- une commande de fourniture d'une réponse, dite réponse de l'utilisateur (STGR), par laquelle l'équipement tiers fournit une réponse de l'utilisateur au module, après que ledit équipement tiers a reçu successivement une indication de commande SAT puis une réponse du module à une commande de récupération d'informations correspondante.

## Patentansprüche

1. Funkmodul (2) von der Art, die mit einer SIM-Karte (1) zusammenwirkt, in der Gestalt von mindestens einem ersten Dialog vom Typ "SIM Application Toolkit", wobei dieser mindestens ein erster Dialog aus mindestens einem Teil eines Satzes von "SIM Application Toolkit"-Befehlen aufgebaut wird, die SAT-Befehle genannt werden, weiche gemäß einer ersten Kodierung geschrieben werden, wobei das Modul ferner mit einer Drittausrüstung (3) zusammenwirkt und Mittel zur Konversion (21) dieses mindestens einen ersten Dialogs zwischen der SIM-Karte und dem Modul in einen mindestens zweiten Dialog zwischen dem Modul und der Drittausrüstung umfasst, wobei dieser mindestens eine zweite Dialog mit mindestens einem Teil des Befehlsatzes und/oder mit Substitutionsangaben aufgebaut wird, welche nach einer zweiten, von der ersten Kodierung abweichenden Kodierung geschrieben werden, so dass die SIM-Karte die Drittausrüstung über das Modul steuert,
**dadurch gekennzeichnet, dass** der besagte Satz von Befehlen und/oder von Substitutionsangaben folgendes umfasst:
- einen Konfigurationsbefehl (STSF) mit dem die Drittausrüstung das Modul über die von ihr unterstützten Funktionalitäten des Typs "SIM Application Toolkit" unterrichtet;
- eine SAT-Befehlsangabe (STIN), mit der das Modul die Drittausrüstung über die SAT-Befehle benachrichtigt, die es von der SIM-Karte erhalten hat;
- einen Befehl zum Wiedererlangen von Informationen (STGI), mit welchem die Drittausrüstung eine, Modulantwort genannte, Antwort von dem Modul anfordert, welche Information bezüglich einer der SAT-Befehle enthält, welcher in einem der vorher von der Drittausrüstung empfangenen SAT-Befehlen angegeben war;
- eine Antwort-Steuerungsangabe (STCR), mit der das Modul eine, Benutzerantwort genannte, Antwort von der Drittausrüstung anfordert, bezüglich einem vom Modul angestrebten Verbindungsaufbau, wobei diese Benutzerantwort von dem Modul an die SIM-Karte geliefert werden soll, so dass die SIM-Karte vorher eine Kontrolle dieser Verbindung durchführen kann;
- einen Befehl zum Liefern einer, Benutzerantwort (STGR) genannten, Antwort, mit der die Drittausrüstung dem Modul eine Benutzerantwort zukommen lässt, nachdem die Drittausrüstung nacheinander eine SAT-Befehlsangabe und dann eine Antwort des Moduls auf einen Befehl zum Wiedererlangen der entsprechenden Information empfangen hat.

2. Modul nach Anspruch 1, **dadurch gekennzeichnet, dass** das Funkmodul (1) einer Vorrichtung aus der folgendes umfassenden Gruppe gehört:
- Funkterminals;
- andere Vorrichtungen als Funkterminals, weiche eine drahtlose Verbindungsfunktionalität benötigen;
- Modems.

3. Modul nach einem der Ansprüche 1 oder 2, **dadurch gekennzeichnet, dass** das Modul (1) mit der Drittausrüstung (3) zusammenwirkt, mittels einer physischen Stütze aus der folgendes umfassenden Gruppe:
- Serienverbindungen
- Infrarotverbindungen;
- Funkverbindungen.

4. Modul nach einem der Ansprüche 1 bis 3, **dadurch gekennzeichnet, dass** die zweite Kodierung der folgendes umfassenden Gruppe angehört:
- Kodierungen des Typs AT;
- Kapselungskodierungen der Ebene 2.

5. Mit einem Funkmodul zusammenwirkende Drittausrüstung nach einem der Ansprüche 1 bis 4, **dadurch gekennzeichnet, dass** es Mittel (31 bis 34) zur Benutzung des Befehlssatzes und/oder von Substitutionsangaben umfasst, welche den Konfigurationsbefehl (STSF), die SAT-Befelsangabe (STIN), den Befehl zum Wiedererlangen von Information (STGI), die Antwortsteuerungsangabe (STCR) und den Befehl zum Liefern einer Benutzerantwort (STGR) genannten Antwort umfasst, wobei die Benutzungsmittel (31 bis 34) den Einsatz des erwähnten mindestens zweiten Dialogs zwischen Modul und Drittausrüstung ermöglichen, so dass die SIM-Karte die Drittausrüstung über das Modul steuert.

6. Steuersystem einer Drittausrüstung (3) mit einer SIM-Karte (1) über ein Funkmodul (2), **dadurch gekennzeichnet, dass** dieses Funkmodul (2) mit einem der Ansprüche 1 bis 4 m Einklang steht.

7. Verfahren zum Steuern einer Drittausrüstung (3) mit einer SIM-Karte (1) über ein Funkmodul (2), wobei es sich dabei um ein Modul von der Art handelt, die mit der SIM-Karte in Form von mindestens einem ersten Dialog vom Typ "SIM Application Toolkit" zusammenwirkt, wobei dieser mindestens ein erster Dialog aus mindestens einem Teil eines Satzes von "SIM Application Toolkit"-Befehlen aufgebaut wird, welche SAT-Befehle genannt werden und die gemäß einer ersten Kodierung geschrieben werden,
wobei dieses Verfahren einen Schritt umfasst, in dem das Modul den mindestens ersten Dialog zwischen der SIM-Karte und dem Modul in mindestens einem zweiten Dialog zwischen dem Modul und der Drittausrüstung konvertiert, wobei dieser mindestens ein zweiter Dialog aus mindestens einem Teil eines Befehlssatzes und/oder Substitutionsangaben aufgebaut ist, welche nach einer zweiten, von der ersten Kodierung verschiedenen Kodierung geschrieben wird, so dass die SIMS-Karte die Drittausrüstung über das Modul steuert,
**dadurch gekennzeichnet, dass** der Befehlssatz und/oder der Satz von Substitutionsangaben folgendes umfasst:
- einen Konfigurationsbefehl (STSF) mit dem die Drittausrüstung das Modul über die von ihr unterstützten Funktionalitäten des Typs "SIM Application Toolkit" unterrichtet;
- eine SAT-Befehlsangabe (STIN), mit der das Modul die Drittausrüstung über die SAT-Befehle benachrichtigt, die es von der SIM-Karte erhalten hat;
- einen Befehl zum Wiedererlangen von Informationen (STGI), mit welchem die Drittausrüstung eine, Modulantwort genannte, Antwort von dem Modul anfordert, welche Information bezüglich einer der SAT-Befehle enthält, welcher in einem der vorher von der Drittausrüstung empfangenen SAT-Befehlen angegeben war;
- eine Antwort-Steuerungsangabe (STCR), mit der das Modul eine, Benutzerantwort genannte, Antwort von der Drittausrüstung anfordert, bezüglich einem vom Modul angestrebten Verbindungsaufbau, wobei diese Benutzerantwort von dem Modul an die SIM-Karte geliefert werden soll, so dass die SIM-Karte vorher eine Kontrolle dieser Verbindung durchführen kann;
- einen Befehl zum Liefern einer, Benutzerantwort (STGR) genannten, Antwort, mit der die Drittausrüstung dem Modul eine Benutzerantwort zukommen lässt, nachdem die Drittausrüstung nacheinander eine SAT-Befehlangabe und dann eine Antwort des Moduls auf einen Befehl zum Wiedererlangen der entsprechenden Information empfangen hat.

## Claims

1. Radio communication module (2), of the type which interacts with a SIM card (1) by means of at least one first dialogue of the "SIM Application Toolkit" type, the said at least one first dialogue being constructed with the use of at least some of a set of "SIM Application Toolkit" commands, known as SAT commands, written in a first code, the module also interacting with third-party equipment (3) and comprising means (21) for converting the said at least one first dialogue, between the SIM card and the module, into at least one second dialogue, between the module and the third-party equipment, the said at least one second dialogue being constructed with the use of at least some of a set of substitute commands and/or instructions written in a second code which is different from the first code, in such a way that the SIM card controls the third-party equipment via the module,
**characterized in that** the said set of substitute commands and/or instructions comprises:
- a configuration command (STSF), by means of which the third-party equipment informs the module of the functionalities of the "SIM Application Toolkit" type which the said third-party equipment supports;
- an SAT command instruction (STIN), by means of which the module indicates to the third-party equipment which of the said SAT commands it has received from the SIM card;
- a data recovery command (STGI), by means of which the third-party equipment asks the module to supply it with a response, called the module response, containing data relating to one of the said SAT commands listed in a SAT command instruction received previously by the third-party equipment;
- a response monitoring instruction (STCR), by means of which the module asks the third-party equipment to supply it with a response, called the user response, relating to a connection which the module wishes to establish, the said user response being designed to be supplied to the SIM card by the module, in such a way that the SIM card carries out a preliminary monitoring of the said connection;
- a command for the supply of a response, called the user response (STGR), by means of which the third-party equipment supplies a response from the user to the module, after the said third-party equipment has received, in sequence, a SAT command instruction followed by a response of the module to a corresponding data recovery command.

2. Module according to Claim 1, **characterized in that** the said radio communication module (1) is included in a device belonging to the group comprising:
- radio communication terminals;
- devices, other than radio communication terminals, requiring a wireless communication functionality;
- modems.

3. Module according to any one of Claims 1 and 2, **characterized in that** the said module (1) interacts with the said third-party equipment (3) in a physical medium belonging to the group comprising:
- serial links;
- infrared links;
- radio links.

4. Module according to any one of Claims 1 to 3, **characterized in that** the second code belongs to the group comprising:
- AT codes;
- level 2 encapsulation codes.

5. Third-party equipment, of the type which interacts with a radio communication module according to any one of Claims 1 to 4, **characterized in that** it comprises means (31 to 34) for using the said set of substitute commands and/or instructions comprising the said configuration command (STSF), the said SAT command instruction (STIN), the said data recovery command (STGI), the said response monitoring instruction (STCR) and the said command for supplying a response, called the user response (STGR), the said means (31 to 34) permitting the implementation of the said at least one second dialogue, between the said module and the said third-party equipment, in such a way that the said SIM card commands the said third-party equipment via the said module.

6. System for controlling third-party equipment (3) by means of a SIM card (1), via a radio communication module (2), **characterized in that** the said radio communication module (2) conforms to any one of Claims 1 to 4.

7. Method for controlling third-party equipment (3) by means of a SIM card (1), via a radio communication module (2), the said radio communication module being of the type which interacts with the said SIM card by means of at least one first dialogue of the "SIM Application Toolkit" type, the said at least one first dialogue being constructed with the use of at least some of a set of "SIM Application Toolkit" commands, known as SAT commands, written in a first code, the said method comprising a step of conversion, by the said module, of the said at least one first dialogue, between the said SIM card and the said module, into at least one second dialogue, between the said module and the said third-party equipment, the said at least one second dialogue being constructed with the use of at least some of a set of substitute commands and/or instructions written in a second code which is different from the first code, in such a way that the said SIM card controls the said third-party equipment via the said module,
**characterized in that** the said set of substitute commands and/or instructions comprises:
- a configuration command (STSF), by means of which the third-party equipment informs the module of the functionalities of the "SIM Application Toolkit" type which the said third-party equipment supports;
- an SAT command instruction (STIN), by means of which the module indicates to the third-party equipment which of the said SAT commands it has received from the SIM card;
- a data recovery command (STGI) , by means of which the third-party equipment asks the module to supply it with a response, called the module response, containing data relating to one of the said SAT commands listed in a SAT command instruction received previously by the third-party equipment;
- a response monitoring instruction (STCR), by means of which the module asks the third-party equipment to supply it with a response, called the user response, relating to a connection which the module wishes to establish, the said user response being designed to be supplied to the SIM card by the module, in such a way that the SIM card carries out a preliminary monitoring of the said connection;
- a command for the supply of a response, called the user response (STGR), by means of which the third-party equipment supplies a response from the user to the module, after the said third-party equipment has received, in sequence, a SAT command instruction followed by a response of the module to a corresponding data recovery command.
